# EUROPEAN PATENT APPLICATION

(11) **EP 4 822 630 A1**
(43) Date of publication of application: **14.10.2026**
(21) Application number: 25170124.9
(22) Date of filing: 11.04.2025
(51) Int. Cl.: G06Q 20/36, G06Q 20/38, G06Q 20/40

(54) **TERMINAL DEVICES AND METHOD FOR IDENTIFIED HARDWARE PAYMENTS**

(71) Applicant: Giesecke+Devrient advance52 GmbH, 81677 München (DE)
(72) Inventor: HUPEL, Lars, 81677 München (DE)
(74) Representative: Ter Meer und Partner mbB

(57) **Abstract**

Provided is a terminal device for participating in an electronic payment transaction. Preferably, the payment transaction is token-based, e. g., using a Central Bank Digital Currency - CBDC. The terminal device comprises a secure hardware unit; a display device; and a processing unit. The processing unit is operatively coupled with the secure hardware unit and the display device. The processing unit is configured to receive a certificate of a secure hardware unit of a further terminal device participating in the payment transaction, wherein the certificate is configured to authenticate the further terminal device and comprises a data field in which a name corresponding to a user of the further terminal device and an associated authorization level are stored. Upon receipt of the certificate, the processing unit is configured to obtain the name and the authorization level from the data field and display the name and the authorization level on the display device for validating the user of the further terminal device. This terminal device may act as or correspond to a payer role within the electronic payment transaction.

## Description

The present invention relates to terminal devices, each comprising a secure token transaction unit and a corresponding method for identified hardware payments, preferably for verifying a recipient's authenticity.

Tokens - also referred to as digital assets, electronic coins, coin data sets - may represent any digital asset, in particular a digital currency, preferably a central bank digital currency, short CBDC. These tokens are issued and deleted by a unit of the transaction system, such as an issuing authority, or a central bank unit or a commercial bank unit, hereinafter also referred to as secure token issuing unit.

Electronic token transactions and/or storage of tokens and any associated transaction data and/or storage data must be safe and secure and so, means for protecting confidentiality, integrity, and availability of exchanged and/or stored token data must be implemented. This is true for electronic payment transactions and associated payment transactions and payment storages in which a monetary value is linked with each token, subsequently also referred to as a token value.

There are different technical approaches for a digital asset e.g., digital currency such as central bank digital currency, CBDC, issued by a central bank.

According to a first approach, tokens are merely cryptographically secured by the central bank unit and the cryptographically secured tokens are exchanged directly between token management units - also referred to as wallets - of the participants in an encrypted manner. The exchanged token may also be stored in an encrypted manner. The token management units can verify the authenticity of the tokens based on the cryptographic security, such as keys and signatures, and for example checks a certificate from the central bank and/or the other token management units for validity within the certificate hierarchy in advance via online access or following the offline-protocol of the system.

According to a second approach, tokens are stored in a centralized or decentralized blockchain/distributed ledger of the transaction system, e.g., organized by a central bank unit. For a transaction, an ownership of a token record changes in the blockchain for which a lot of information (sender/recipient/amount) is required and/or even published. Sender and recipient of the token need an online access to the blockchain at the time of the transaction.

According to a favorable third approach as for instance described in WO 2020 / 212 331 A1 or WO 2023 / 036 458 A1 tokens are stored in a local token management unit to be directly exchanged between participants of an electronic payment transaction system. The transferred token can validly be used after receipt from another participant without a need of approval or verification via an online connection. So, if an online connection is not available or inconvenient or should not be used for a specific token transaction, it remains possible to validly transfer tokens directly between participants in the electronic payment transaction system. For security-, verification- and registration-purposes, a token register stores token references of all valid tokens without knowing the tokens itself. So, the user can check validity of a received token. The token register only stores token references of the corresponding token. Tokens can be switched, split or merged by each individual participant, e.g., ownership of tokens can be switched from one participant to another participant, tokens can be split into plural tokens, e.g., for obtaining a token with a reduced monetary value and/or plural tokens can be merged to a single token, e.g., for obtaining a token with a higher monetary value.

Each participant in the electronic payment transaction system according to the third approach comprises a transaction unit or token management unit that is assigned to him. Each of these transaction units enable a high standard for security, confidentiality and safety regarding payment transactions and are therefore referred to as secure transaction units. The transaction unit is also known as wallets or token-wallets.

A wallet can be provided as a hardware wallet, e.g. as a smart card issued to a participant, or can be a so-called hosted-wallet, e.g. a wallet that is hosted by the individual service provider. A wallet may be hosted in a terminal device.

Electronic token transactions and/or storage of tokens and any associated transaction data and/or storage data in an electronic token transaction system must be safe and secure and so, means for protecting confidentiality, integrity, and availability of exchanged and/or stored token data must be implemented. This is especially true for electronic payment transactions and associated payment transactions and payment storages in which a monetary value is linked with each token.

Despite efforts to protect the exchange and storage of tokens, there remains a risk in current electronic payment transactions that the receiver of a payment is not who he pretends to be. A malicious third party, holding a genuine wallet, could redirect a payment without the payer noticing: the payment will still go to a genuine wallet, but not to the expected wallet, i. e., the wallet of the expected recipient. A genuine wallet is considered to be not fake. A genuine wallet may also be not authentic, i. e., authenticated with an identity of the payee.

Known payment transactions between a terminal device including a first wallet assigned to the payer and a further terminal device including a second wallet assigned to the recipient involve: defining a payment; establishing a secure channel between the first wallet and the second wallet; and paying, i. e., transferring a token, within the established secured wallet-channel. The malicious third party may interfere with the payment transaction, in particular intervene into the payment transaction during the payment definition step using a third wallet, which is a genuine wallet. This intervention may include manipulating the target number before or on transit to the first wallet to correspond to the third wallet. Moreover, the malicious third party could manipulate establishing a contact between the first wallet and the second wallet to include the third wallet. All these potential manipulations have in common that the first wallet may trigger a token transfer to the third wallet instead of the second wallet, while the first wallet, in particular the user corresponding to the first wallet believes to pay to the second wallet.

In an example scenario, the third party may be in vicinity to the payer-payee couple and therefore in reach of a Bluetooth connection between the two genuine parties representing payer and payee.

In another scenario, a street merchant as third party could pretend to be representing a company as (virtual) second party, i. e., conceal its true identity for selling counterfeit goods. In this scenario, the payer may believe to pay to the company but actually pay to the street merchant.

Hence, there is a need to empower a terminal device for an electronic payment transaction to verify the authenticity of the recipient. Moreover, there is a need to provide a corresponding payment transaction method.

The above-identified objectives are solved with the features of the independent patent claims. Further advantageous embodiments are described in the dependent patent claims.

In a first independent aspect of the present invention, a terminal device for participating in an electronic payment transaction is provided. Preferably, the payment transaction is token-based, e. g., using a Central Bank Digital Currency - CBDC. The terminal device comprises a secure hardware unit; a display device; and a processing unit. The processing unit is operatively coupled with the secure hardware unit and the display device. The processing unit is configured to receive a certificate of a secure hardware unit of a further terminal device participating in the payment transaction, wherein the certificate is configured to authenticate the further terminal device and comprises a data field in which a name corresponding to a user of the further terminal device and an associated authorization level are stored. Upon receipt of the certificate, the processing unit is configured to obtain the name and the authorization level from the data field, and display the name and the authorization level on the display device for validating the user of the further terminal device. This terminal device acts as or corresponds to a payer role within the electronic payment transaction.

In a second independent aspect of the present invention, a further terminal device for participating in a payment transaction is provided. The further terminal device comprises a secure hardware unit, in which a certificate is stored, wherein certificate is configured to authenticate the terminal device and comprises a data field in which a name corresponding to a user of the terminal device and an associated authorization level are stored. The further terminal device further comprises a processing unit. The processing unit is operatively coupled with the secure hardware unit. The processing unit is configured to obtain the certificate of the secure hardware unit. The processing unit is further configured to provide the certificate to a further terminal device, namely a terminal device according to an aspect of the present disclosure, participating in the payment transaction for enabling validating the user of the further terminal device. The further terminal device acts as or corresponds to a payee role within the electronic payment transaction.

In another independent aspect of the present invention, a method for initiating a payment transaction between a first terminal device and a second terminal device is provided. The first terminal device may be a terminal device according to the first independent aspect of the invention and the second terminal device may be a terminal device according to the second independent aspect of the invention. The method comprises: the first terminal device receiving a certificate of a secure hardware unit of the second terminal device participating in the payment transaction, wherein the certificate is configured to authenticate the second terminal device and comprises a data field in which a name corresponding to a user of the second terminal device and an associated authorization level are stored; upon receipt of the certificate, extracting the name and the authorization level from the data field, and displaying the name and the authorization level on the display device of the first terminal device; and upon successfully validating the user of the further terminal device, continuing the payment transaction.

In another independent aspect of the present invention, a method for initiating a payment transaction between a first terminal device and a second terminal device is provided. The first terminal device may be a terminal device according to the first independent aspect of the invention and the second terminal device may be a terminal device according to the second independent aspect of the invention. The method comprises: pairing the first terminal device and the second terminal based on: an authenticated pairing mode using a Bluetooth Low Energy interface; an operating system level pairing; or a mutual authentication between respective secure elements or a secure element and a simple element of the first terminal device and the second terminal device. The mutual authentication further comprises the first terminal device receiving a certificate of a secure hardware unit of the second terminal device participating in the payment transaction, wherein the certificate is configured to authenticate the second terminal device and comprises a data field in which a name corresponding to a user of the second terminal device and an associated authorization level are stored; upon receipt of the certificate, extracting the name and the authorization level from the data field, and displaying the name and the authorization level on the display device of the first terminal device; and upon successful pairing, continuing the payment transaction.

The gist of the invention is that due to the presentation of the name in combination with the authorization level, the user of the first terminal device acting in the payer role may easily distinguish between the expected payee and a malicious third party having sneaked into the electronic payment transaction between the first terminal device and the second terminal device. The name and authorization level may be understood as parameters of the certificate that are not set or settable by a user. Instead, these parameters may be provided and stored in the data field by an external identity in a way that is tamper protected, for example, protected by a digital signature from the issuing entity. As such, the malicious third party may not manipulate the data field of the certificate. Therefore, the payer may validate the authenticity of the payee, not only of his wallet.

The terminal device, also referred to as the first terminal device, the further terminal device, also referred to as the second terminal device, and/or the method may further comprise one or more of the following features:
The terminal device and the further terminal device may consist of or include equal hardware, however, provide complementary functions to collaboratively conduct an electronic payment transaction.

The processing unit may be configured to instruct or request the secure hardware unit, in particular a control module of the secure hardware unit, to initiate an electronic payment transaction, also known as hardware payment transaction.

A combination of name and authorization level may be unique.

The data field of the certificate may be configured to be read-only.

The secure hardware unit may also be referred to as a secure token transaction unit. The secure hardware unit may comprise a memory for storing a plurality of tokens, wherein each token is a monetary value token, preferably a central bank digital currency token. The secure hardware unit may further comprise a control module that is configured to negotiate a secure payment channel with a secure element of the further terminal device. The control module may be further configured to execute a token transfer from the secure hardware unit of the terminal device acting in the payer role to the secure hardware unit of the further terminal device acting in the payee role.

A secure hardware unit (as described herein) may be or include a secure element, also referred to as secure wallet, secure token management unit; token wallet; and/or wallet may be used to locally manage token in the memory itself and/or to transform the tokens and to register the token in an electronic token transaction system. The token may be stored in a token storage that is also managed by the token wallet.

Each secure hardware unit may comprise one secure token transaction unit identifier, also referred to as wallet-ID or wallet identification data. The secure token transaction unit identifier is assigned to a specific secure token transaction unit for uniquely identifying the secure token transaction unit in the electronic token transaction system. The secure token transaction unit identifier is preferably stored in the specific secure wallet.

The secure token transaction unit identifier may be generated at the unit that issues the secure hardware unit, such as a financial service provider unit or a central entity in the transaction system.

Alternatively, the secure token transaction unit identifier may be generated by an official authority, a secure token issuing unit, e.g., a central bank unit. In this case, the secure token transaction unit identifier may be received by control means of the secure hardware unit issuing unit or the secure register unit.

In one embodiment, the secure token transaction unit identifier is a mandatory data to be transmitted between individual users in the electronic transaction system for direct exchange of tokens. This may be a system requirement to ensure high standard security and in such a case, the secure token transaction unit identifier is not only used to uniquely identify the secure token transaction unit, but also possible to eventually identify the "real" user by resolving the user information by using an additional secure register unit.

In one embodiment, the secure hardware unit may be or include a secure cryptographic device, e. g., as specified according to ISO 13491-1. The secure hardware unit may be or include a device that provides physically and logically protected cryptographic services and storage, and which can be integrated into a larger system, such as an automated teller machine (ATM) or point-of-sale (POS) terminal.

In one embodiment, the secure hardware unit may be a simple element, e. g., as specified in EP23020212.9. The secure hardware unit may have a lower security level than the secure element, in particular due to lacking a secure component such as a trusted execution environment (TEE), a hardware security module (HSM), a secure or tamper-proof storage unit, or a secure program code. In an offline scenario, a secure hardware unit being configured as simple element thus may only receive tokens, not send tokens, i. e., act as the payee role.

The display device may include a touch panel. The terminal device may include the secure hardware unit, the display device and the processing unit within a single case or housing. The terminal device may be an end device, preferably portable end device, such as a smartphone, a smartwatch, a tablet, a POS-terminal (acting the payee role) or the like. In one embodiment, the secure hardware unit may be included in a smartcard outside the terminal device and operatively couplable or coupled to a terminal device including the processing unit and the display device within a single housing through a near-field communication (NFC) interface.

The name corresponding to a user refers to any name that can be associated with the entity acting as payee. The name may be a brand name, a name of the registered organization acting as payee, a name of the individual person acting as payee, a name of an authority, e. g., governmental authority, acting as payee, and so on. Accordingly, the certificate provided by the secure hardware unit of the further terminal device may also be referred to as the payee's certificate.

The processing unit may be referred to as a rich execution environment (REE) providing a hugely extensible and versatile operating environment. The processing unit may be embedded into a trusted execution environment (TEE), e. g., certified by the Global Platform. The processing unit may include a toolkit that is adapted to an interaction and/or a communication with the secure hardware unit.

The processing unit may be configured to receive the certificate of the secure hardware unit of the further terminal device. The processing unit may configure a communication unit or interface of the terminal device to open / route a communication channel to a communication unit or interface of the further terminal device. The certificate may be transferred from the secure hardware unit of the further terminal device to the secure hardware unit of the terminal device during negotiating a secure (wallet-)channel for the subsequent token transfer via the communication channel between the participating terminal devices. The certificate may be stored in the memory of the secure hardware unit. The processing unit may be configured to access the received certificate stored in the secure hardware unit and thereby receive the certificate of the secure hardware unit of the further terminal device. Thereby, the processing unit actively influences or hooks into the channel negotiation. This functionality of the processing unit may be provided within a dedicated Application Data Protocol Unit (APDU).

The processing unit may obtain the name and the authorization level from the data field by instructing or requesting the secure hardware unit to extract the name and the authorization level from the data field and to provide the extracted name and authorization level to the processing unit.

By obtaining the name and the authorization level from the data field, the processing unit further influences the channel negotiations. The processing unit may be configured to request a user of the terminal device to approve the payment transaction based on the name and the authorization level extracted from the certificate, in particular based on displaying the name and the authorization level to the user on the display device of the terminal device.

In one embodiment, the control unit of the secure hardware unit may request the processing unit of the terminal device to display the name and the authorization level of the certificate. The control unit of the secure hardware unit may also be configured to extract the name and the authorization level from the data field of the secure hardware unit. The control unit of the secure hardware unit may be further configured to request a user input from the processing unit to proceed further with the channel negotiation with the secure hardware unit of the further terminal device. The user input may be an approval of a payment transaction upon display of the name and the authorization level provided within the certificate assigned to the secure hardware unit of the further terminal device.

In one embodiment, the secure hardware unit or its control module of the terminal device may be configured to compare the name, preferably in combination with the authorization level, with an intended wallet name that has been received from the processing unit of the terminal device. In case the certified name matches the intended wallet name, the secure channel may proceed with establishing the secure wallet channel. Otherwise, the secure hardware unit may be configured to abort the payment transaction.

In one embodiment, the secure hardware unit may be configured to verify a target challenge received via a payment definition channel within the wallet channel.

The payment transaction may be an offline payment transaction, i. e., the participating terminal devices may have no connection to the secure register unit.

The certificate may be requested from and/or provided by an external certificate authority. The certificate authority may be provided by a financial service provider. The certificate may be requested from and/or provided by the financial service provider.

The authorization level, preferably a know-your-customer - KYC - level, may be provided to a user of the further terminal device by an authorization identity external to the terminal device and the further terminal device. The authorization level may be provided externally, e. g., based on presenting a business registration in a trade register. The authorization level may be provided to merchants and/or consumers, which may correspond to users of the further or second terminal device. Thus, the authorization level may reflect a trustworthiness or confidentiality of the payee.

The authorization levels may be defined as a plurality of different levels. The authorization levels may exist on an ordinal scale. The authorization levels may be defined as "low" and "high". The authorization level "high" may be attributed to a certificate of a user based on presenting a trade register excerpt and/or an identity document to the certificate authority and/or the financial service provider. Every certificate which was not requested based on the trade register excerpt and/or the identity document may be attributed with an authorization level "low". Additionally, the authorization level "low" may be attributed to any text that is configured for the secure hardware unit and set as a name through a dedicated setting of the secure hardware unit which can only be changed after PIN entry.

The processing unit may request the secure hardware unit, in particular its control unit, to validate the payee's certificate beyond evaluating its certificate chain. The processing unit may request the secure hardware unit to validate the certificate based on a serial number and/or a fingerprint. The secure hardware unit, in particular a control module of the secure hardware unit, may be configured to validate the certificate based on a serial number and/or a fingerprint.

In one embodiment, the terminal device may transmit an expected name and/or authorization level to the secure hardware unit. During negotiating the secure channel, upon receipt of the certificate of the secure hardware unit of the further terminal device, the control unit of the secure hardware unit may be configured to validate the data field of the received certificate against the expected name and/or authorization level. Based on this validation, the control unit of the secure hardware unit may proceed or refuse to establish the secure channel with the secure hardware unit of the further terminal device.

The processing unit may be further configured to request the certificate from the secure hardware unit after having established a secured channel based on a mutual authentication with the further terminal device. The processing unit may be configured to further verify the certificate before initiating a token transfer or token transmission.

The processing unit may be further configured to generate a validation request based on the name and the authorization level. The processing unit may be further configured to display the validation request on the display device. The processing unit may be further configured to receive a user input on the validation request. The processing unit may be further configured to continue or abort the payment transaction based on the user input on the validation request. The validation request may comprise displaying the name in combination with the authorization level and a user input field, e. g., a button for approval and/or denial of the payment transaction. The validation request may include a request to enter a code.

The user input may include a rejection or a confirmation in response to the validation request. The processing unit may be configured to abort the payment transaction in case the user input includes the rejection, and/or to continue the payment transaction in case the user input includes the confirmation.

In other words, in the electronic payment transaction or hardware payment process, an additional step is inserted between negotiation of the secure channel and transmission of the tokens. As part of this additional step, the terminal device acting the payer role may display the name together with the authorization level as extracted from the certificate, for the payer to confirm or reject.

The processing unit may be further configured to instruct the secure hardware unit to initiate a token transmission from the terminal device to the further terminal device based on at least one rule depending on an information stored in the data field.

In the data field of the certificate a location of the further terminal device may be stored. The location may refer to an address of the payee, not necessarily to a current position of the payee. For instance, if the payee is the provider of a terminal of a parking lot, the location may include geocoordinates of the terminal. The processing unit may be configured to instruct the secure hardware unit to initiate a token transmission or transfer from the terminal device to the further terminal device, more precisely to the secure hardware unit of the further terminal device, based on the location. The processing unit may be configured to display the location extracted from the certificate on the display device for validating the user of the further terminal device. The processing unit of the terminal device may be further configured to determine its current location and to compare its current location with the location extracted from the received payee's certificate. This comparison may include a binary result reflecting the received location and the terminal device's current location to be in the same country, same city or within a predetermined distance from the terminal device's current location. This comparison may include a distance result between the received location and the terminal device's location. The processing device may further be configured to display a result of the comparison of the received location and the terminal device's current location on the display device of the terminal device. As such, the payer may readily recognize a malicious attack in case the location of the terminal of the parking lot in front of him would be displayed to be miles away.

The terminal device may be further configured to determine a location of the terminal device. The terminal device may be further configured to determine a distance between the location of the further terminal device and the location of the terminal device. The terminal device may be further configured to instruct the secure hardware unit to initiate a token transmission from the terminal device to the further terminal device based on the determined distance.

The processing unit may be configured to transmit an expected content of the data field to the further terminal device.

The processing unit may be configured to generate a challenge to verify the user of the further terminal device. The processing unit may be configured to provide the challenge to the further terminal device via a payment definition channel. The processing unit may be configured to receive and validate the challenge signed by the further terminal device. The processing unit may be configured to instruct the secure hardware unit to initiate a token transmission from the terminal device to the further terminal device based on the signed challenge.

The further terminal device may comprise a display device. The processing unit of the further terminal device may be operatively coupled to the display device.

The processing unit of the further terminal device may be configured to receive an expected content of the data field from the (first) terminal device; validate the expected content against the data field of the certificate; and continue the payment transaction, only based on a successful validation of the expected content.

The processing unit of the further terminal device may be configured to receive a challenge generated by the (first) terminal device; sign the challenge; and transmit the signed challenge to the (first) terminal device.

The first terminal device and/or the second terminal device may each include a communication interface for establishing a secure channel between the respective terminal devices. This secure channel may be established via the communication interfaces and the respective processing units between the secure hardware unit of the first terminal device and the secure hardware unit of the second terminal device. Accordingly, this secure channel may be referred to as wallet channel. The secure channel may be configured to provide in-transit encryption, e. g., for transmission of tokens.

The secure hardware unit may comprise a token storage as a physical entity. The secure hardware unit may be configured to access the token storage. The token storage may be a token vault of this secure hardware unit. Each secure hardware unit in the transaction system may comprise its own token storage.

From such token storage accessible by the secure hardware unit, each token can be transferred to any other secure hardware unit, e.g., the secure hardware unit of the further terminal device, owned by the payee.

The secure hardware unit may be a secure wallet that may be a hardware security module built in hardware or software to enable tamperproof and secure access to the tokens.

In one embodiment, the method may further include generating, by the processing unit of the further terminal device, a code, displaying the code on the display device of the further terminal device and transferring the code during the secure channel negotiation to the terminal device. The method may further include requesting, by the processing unit of the terminal device, a user input based on the name and the authorization levels extracted from the received certificate, receiving the user input and comparing the user input against the code received from the further terminal device. In case the user input matches the received code, the secure channel may be established and the transmission of tokens initiated. In case the user input does not match the received code, the secure channel negotiation may be aborted and the transmission of tokens prevented.

In case the first terminal device and the second terminal device may be coupled using Bluetooth Low Energy (BLE), an "authenticated pairing" mode may be leveraged in BLE, which ensures by its implementation that no third party can interfere with the first terminal device and the second terminal device.

In case the first terminal device and the second terminal device may be coupled based on the operating system (OS) of the terminal devices, also referred to as OS-level pairing, the pairing itself may ensure by its implementation that no third party can interfere with the first terminal device and the second terminal device. However, this case requires the first terminal device and the second terminal device to each include an operating system of the same OS-provider. An example for OS-level pairing may be a proprietary WiFi-Ad-Hoc service.

However, in case neither the "authenticated pairing" mode nor a proprietary OS-level pairing are available, the solution according to the invention provides a native solution, i. e., independent of the technology used for pairing the involved terminal devices, for preventing fraudulent redirection of tokens during an electronic payment transaction.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.
Fig. 1 shows a schematic sequence diagram for initiating an electronic payment transaction according to prior art.
Fig. 2 shows an exemplary embodiment of a terminal device according to an aspect of the invention.
Fig. 3 shows an exemplary embodiment of a terminal device in direct communication with a further terminal device according to an aspect of the invention.
Fig. 4 shows a schematic sequence diagram for initiating a payment transaction according to an aspect of the invention.

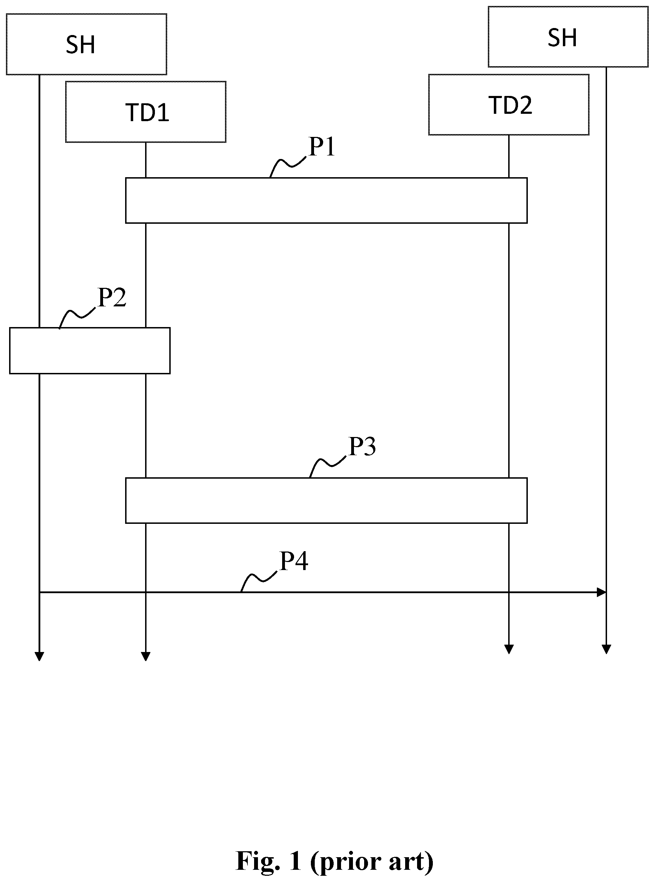

In Fig. 1, a simplified sequence diagram for initiating a payment transaction according to prior art is depicted. In the payment transaction, a first terminal device TD1 including a secure hardware unit SH (or first wallet) and a second terminal device TD2, including a secure hardware unit SH (or second wallet) participate.

The payment transaction is typically initiated by step P1 according to which the first terminal device TD1, in particular its processing unit, defines payment details such as a target number, i. e., a number of the secure hardware unit SH of the second terminal device TD2, and the amount of the transaction. This step may be vulnerable to an attack by a malicious third party, e. g., by manipulating the target number to point to a third wallet, without the first terminal device TD1 and its user noticing.

In a second step P2, the first terminal device TD1 sends the payment details to its secure hardware unit SH. Although this step is performed terminal device internal, there remains a risk of interference by a malicious third party, e. g., by malicious software on the terminal device TD1.

In a subsequent third step P3, the first terminal device TD1 enables its secure hardware unit SH to establish a contact with the secure hardware unit SH corresponding to the target number, e.g., using bluetooth, Wifi or the internet protocol. Even if the target number has not been manipulated until step P3, the malicious third party may intervene during establishing the contact and redirect the contact to its third wallet. The established contact or channel may be also referred to as wallet channel. The wallet channel may be linked via respective communication interfaces of the involved terminal devices TD1 and TD2 or a malicious third terminal device.

Directly after having established a connection in step P3, the secure hardware unit SH is configured to pay in step P4, i. e., to transmit token corresponding to the payment, within the established wallet channel. Thus, in case a malicious third party successfully intervened within any one of steps P1, P2 or P3, the payment according to step P4 would be fraudulently redirected to the malicious third party, in particular without the payer noticing.

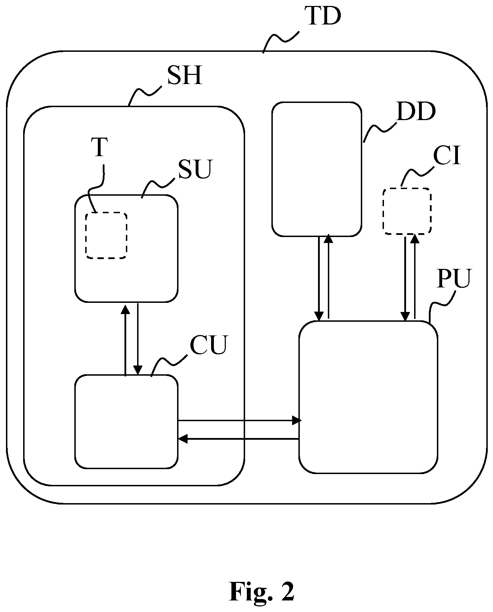

In Fig. 2, an exemplary embodiment of a terminal device according to an aspect of the invention is schematically depicted.

The terminal device TD according to the example of Fig. 2 includes a secure hardware unit SH, a display device DD, a processing unit PU, and optionally a communication interface CI. The processing unit PU is operatively coupled to the secure hardware unit SH, the display device DD and the communication interface CI.

The secure hardware unit SH of the terminal device TD according to the example of Fig. 2 includes a control unit CU and a storage unit SU. The storage unit may include a token storage unit T. The processing unit PU may be operatively coupled to the control unit CU of the secure hardware unit SH, i. e., send and receive data and/or commands to and/or from the control unit CU of the secure hardware unit SH.

In particular, the control unit CU may be configured to receive, via the processing unit PU and optionally via the communication interface CI, a certificate of the secure hardware unit SH of a further terminal device (not shown in Fig. 2). The control unit CU may be configured to verify the chain of the certificate. The control unit CU may be configured to extract a name and an authorization level from a data field included in the certificate. The control unit CU may be configured to provide the extracted name and authorization level to the processing unit PU. The control unit CU may be configured to compare the extracted name and authorization level to an intended or expected name and/or authorization level, preferably received from the processing unit PU.

The processing unit PU is configured to present the extracted name and authorization level on the display device DD to the user of the terminal device TD, i. e., the payer. The processing unit PU may be configured to generate a validation request based on the obtained name and authorization level and to instruct the display device DD to display the validation request to the user. The processing unit PU may be configured to proceed with the payment transaction only if the user approves the validation request. Otherwise, the processing unit PU may be configured to abort the payment transaction.

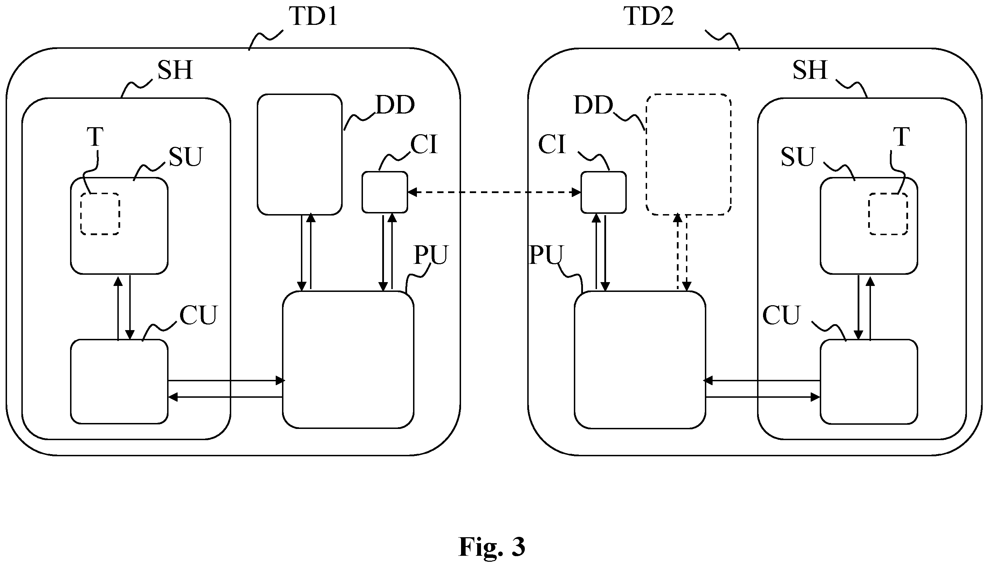

In Fig. 3, an exemplary embodiment of a terminal device in direct communication with a further terminal device according to an aspect of the invention is depicted.

The first terminal device TE1 may act a payer role. The first terminal device TE1 may correspond to the exemplary embodiment of the terminal device TD described with respect to Fig. 2.

The second terminal device TE2, e. g., a POS-terminal, may act a payee role. The secure hardware unit SH of the second terminal device TD2 may include a certificate that includes a data field in which a name corresponding to a user of the second terminal device TD2 is stored. Moreover, an authorization level corresponding to the user is stored in the data field of the certificate. The secure hardware unit SH of the second terminal device TD2 transmits the certificate during negotiating / establishing the wallet channel to the secure element of the first terminal device TE1. In Fig. 3, the wallet channel is depicted by the dashed double arrow.

The first terminal device TE1 may determine, including input of its user, the authenticity of the user of the second terminal device TD2 only based on the additional information (name and authorization level) in the certificate of the secure hardware unit SH of the second terminal device TD2.

Alternatively, the first terminal device may generate a challenge to the second terminal device TD2, such as requesting a signature of its own certificate. Accordingly, the processing unit PU of the second terminal device TD2 may be configured to request the certificate of its secure hardware unit SH and to sign the certificate before transmitting the signed certificate to the first terminal device TD1.

Based on sharing the additional information in the certificate, such as the name and the authorization level associated with the user of the second terminal device TD2, but also a location or address of the user of the second terminal device TD2, the confidentiality and security of the payment transaction may be considerably increased. Based on sharing the additional information in the certificate, the risk of intervention of a malicious third party may be marginalized.

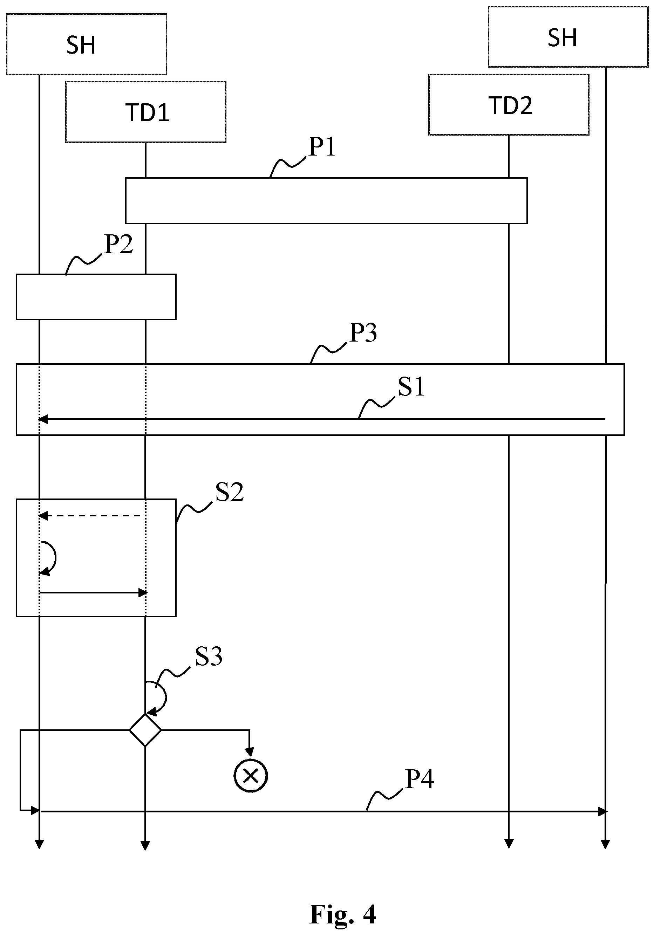

In Fig. 4, a schematic sequence diagram for initiating a payment transaction according to an aspect of the invention is depicted.

The sequence diagram of Fig. 4 is an extension of the sequence diagram of Fig. 1. In step P3, the transfer of the certificate has been highlighted and attributed to a first step of the method. In the first step S1, the first terminal device TD1 receives a certificate of a secure hardware unit SH of the second terminal device TD2 participating in the payment transaction, wherein the certificate is configured to authenticate the second terminal device TD2, in particular its user, and comprises a data field in which a name corresponding to a user of the second terminal device TD2 and an associated authorization level are stored.

The method further includes a second step S2, according to which, upon receipt of the certificate, the name and the authorization level from the data field are extracted. More precisely, the certificate may be checked or verified by the secure hardware unit SH of the first terminal device TD1. This secure hardware unit SH may also extract the name and the authentication level, and subsequently forward the extracted name and authentication level to the processing unit of the first terminal device TD1. In case the certificate includes further data in its data field, such as a location, address, special offer policies or the like, the secure hardware unit SH may also extract these data and forward them to the first terminal device TD1. The first terminal device TD1 may use the data obtained from the secure hardware unit SH to validate the payee and/or to apply special conditions to the payment amount, e. g. a predetermined discount.

In a third step S3, the first terminal device TD1 may instruct its display device to display the name and the authorization level on the display device. The processing unit of the first terminal device TD1 may be configured to generate a validation request to the user for validating the payee. The processing unit of the first terminal device TD1 may impose one or more rule-based policies on the payment transaction based on the authorization level. For instance, the processing unit may be configured to block payment to a payee if the data field of its certificate stored an authorization level that is below a predetermined threshold. The processing unit may be configured to limit the payment amount based on the authorization level obtained from the payee's certificate. These functionalities may further increase the consumer protection for electronic payment transactions.

In case the validation request is actively approved or approved based on a predetermined rule, the payment transaction may continue with a secured (encrypted) token transmission in step P4. Otherwise, the payment transaction may be stopped, cancelled, aborted, and preferably reported.

### Reference signs

- TD: Terminal device
- TD1: First terminal device
- TD2: Second terminal device
PU Processing unit
CI Communication interface
DD Display device
- SH: Secure hardware unit
CU Control unit
SU Storage unit
T Token storage

## Claims

1. A terminal device (TD, TD1) for participating in a payment transaction, the terminal device (TD, TD1) comprising
a secure hardware unit (SH);
a display device (DD); and
a processing unit (PU), operatively coupled with the secure hardware unit (SH) and the display device (DD) and configured to:
receive a certificate of a secure hardware unit (SH) of a further terminal device (TD, TD2) participating in the payment transaction, wherein the certificate is configured to authenticate the further terminal device (TD, TD2) and comprises a data field in which a name corresponding to a user of the further terminal device (TD, TD2) and an associated authorization level are stored;
upon receipt of the certificate, obtain the name and the authorization level from the data field, and display the name and the authorization level on the display device (DD) for validating the user of the further terminal device (TD, TD2).

2. The terminal device (TD, TD1) of claim 1, wherein the secure hardware unit (SH) is configured to validate the certificate based on a serial number and/or a fingerprint.

3. The terminal device (TD, TD1) of claim 1 or claim 2, wherein the processing unit (PU) is further configured to request the certificate from the secure hardware unit (SH) after having established a secured channel based on a mutual authentication with the further terminal device (TD, TD2).

4. The terminal device (TD, TD1) according to any of the preceding claims, wherein the authorization level, preferably a know-your-customer - KYC - level, is provided to a user of the further terminal device (TD, TD2) by an authorization identity external to the terminal device (TD, TD1) and the further terminal device (TD, TD2).

5. The terminal device (TD, TD1) according to any of the preceding claims, wherein the processing unit (PU) is further configured to:
generate a validation request based on the name and the authorization level,
display the validation request on the display device (DD),
receive a user input on the validation request, and
continue or abort the payment transaction based on the user input on the validation request.

6. The terminal device (TD, TD1) of claim 5, wherein the user input includes a rejection or a confirmation in response to the validation request, wherein the processing unit (PU) is configured to abort the payment transaction in case the user input includes the rejection, and/or to continue the payment transaction in case the user input includes the confirmation.

7. The terminal device (TD, TD1) according to any of the preceding claims, wherein the processing unit (PU) is further configured to instruct the secure hardware unit (SH) to initiate a token transmission from the terminal device (TD, TD1) to the further terminal device (TD, TD2) based on at least one rule depending on an information stored in the data field.

8. The terminal device (TD, TD1) according to any of the preceding claims, wherein in the data field of the certificate a location of the further terminal device (TD, TD2) is stored, and wherein the processing unit (PU) is configured to instruct the secure hardware unit (SH) to initiate a token transmission from the terminal device (TD, TD1) to the further terminal device (TD, TD2) based on the location.

9. The terminal device (TD, TD1) according to claim 8, wherein the processing unit (PU) is further configured to:
determine a location of the terminal device (TD, TD1);
determine a distance between the location of the further terminal device (TD, TD2) and the location of the terminal device (TD, TD1); and
instruct the secure hardware unit (SH) to initiate a token transmission from the terminal device (TD, TD1) to the further terminal device (TD, TD2) based on the determined distance.

10. The terminal device (TD, TD1) according to any of the preceding claims, wherein the processing unit (PU) is configured to transmit an expected content of the data field to the further terminal device (TD, TD2).

11. The terminal device (TD, TD1) according to any of the preceding claims, wherein the processing unit (PU) is further configured to:
generate a challenge to verify the user of the further terminal device (TD, TD2);
provide the challenge to the further terminal device (TD, TD2) via a payment definition channel;
receive and validate the challenge signed by the further terminal device (TD, TD2); and
instruct the secure hardware unit (SH) to initiate a token transmission from the terminal device (TD, TD1) to the further terminal device (TD, TD2) based on the signed challenge.

12. A terminal device (TD, TD2) for participating in a payment transaction, the terminal device (TD, TD2) comprising
a secure hardware unit (SH), in which a certificate is stored, wherein certificate is configured to authenticate the terminal device (TD, TD2) and comprises a data field in which a name corresponding to a user of the terminal device (TD, TD2) and an associated authorization level are stored; and
a processing unit (PU), operatively coupled with the secure hardware unit (SE) and configured to:
obtain the certificate of the secure hardware unit (SH); and
provide the certificate to a further terminal device (TD, TD1), namely a terminal device (TD, TD1) according to any of the preceding claims, participating in the payment transaction for enabling validating the user of the terminal device (TD, TD1).

13. The terminal device (TD, TD2) according to claim 12, wherein the processing unit (PU2) is further configured to
receive an expected content of the data field from the further terminal device (TD, TD1);
validate the expected content against the data field of the certificate; and
continue the payment transaction, only based on a successful validation of the expected content.

14. The terminal device (TD, TD2) according to claim 12 or claim 13, wherein the processing unit (PU) is further configured to
receive a challenge generated by the further terminal device (TD, TD1);
sign the challenge; and
transmit the signed challenge to the further terminal device (TD, TD1).

15. A method for initiating a payment transaction between a first terminal device (TD1) and a second terminal device (TD2), the method comprising:
the first terminal device (TD1) receiving a certificate of a secure hardware unit (SH) of the second terminal device (TD2) participating in the payment transaction, wherein the certificate is configured to authenticate the second terminal device (TD2) and comprises a data field in which a name corresponding to a user of the second terminal device (TD2) and an associated authorization level are stored;
upon receipt of the certificate, extracting the name and the authorization level from the data field, and displaying the name and the authorization level on the display device (DD) of the first terminal device (TD1); and
upon successfully validating the user of the further terminal device (TD, TD2), continuing the payment transaction.
